# EUROPÄISCHE PATENTSCHRIFT

(11) **EP 1 524 465 B1**
(45) Veröffentlichungstag und Bekanntmachung des Hinweises auf die Patenterteilung: **14.06.2006**
(21) Anmeldenummer: 04008132.5
(22) Anmeldetag: 02.04.2004
(51) Int. Cl.: F16L 37/084

(54) **Steckverbindung für den Anschluss von Rohren und Schläuchen mit Sicherungsring**
Quick-connect coupling with a security ring for the connection of tubes and hoses
Raccord rapide avec une bague de sécurité pour la connection de tubes et tuyaux flexibles

(30) Priorität: 15.10.2003 DE 10347926
(43) Veröffentlichungstag der Anmeldung: 20.04.2005
(73) Patentinhaber: Henn GmbH & Co.KG, 6850 Dornbirn (AT)
(72) Erfinder: Hartmann, Harald, 6830 Rankweil (AT)
(74) Vertreter: Riebling, Peter

(56) Entgegenhaltungen:
- EP-A2- 0 911 565
- DE-A1- 2 948 560
- DE-A1- 3 815 171
- US-A- 5 273 323
- US-A- 6 042 154

## Beschreibung

Die Erfindung betrifft eine Steckverbindung für den Anschluss von Rohren und Schläuchen mit Sicherungsring nach dem Oberbegriff des Patentanspruchs 1. Derartige Steckverbindungen werden insbesondere im Fahrzeugbau für den Anschluss von Rohren und Schläuchen an beliebigen Stutzen verwendet. Die Steckverbindung zeichnet sich dadurch aus, dass ein Stutzen, der beispielsweise fest an einem Kühler oder an einem Gerät befestigt ist, mit einem darauf geschobenen und verrasteten Stecker abdichtend verbunden ist. Dieser Stecker ist seinerseits mit einem Schlauch, einem Rohr oder dergleichen verbunden. Der Stutzen kann auch an einem beweglichen Teil angeordnet sein.

Hierbei ist es gleichgültig, ob der Stecker eine werkstoffeinstückige Verbindung mit dem daran ansetzenden Schlauch bildet oder ob die beiden Teile aus werkstoffgetrennten Materialien bestehen.

Derartige Steckverbindungen werden insbesondere im Fahrzeugbau verwendet, worauf die Erfindung jedoch nicht beschränkt ist. Die Erfindung betrifft sämtliche abdichtende Steckverbindungen, die für die luft- oder flüssigkeitsleitende Verbindung von Rohren und Schläuchen geeignet sind.

Zur Abdichtung der Steckverbindung ist es bekannt, im Innenraum des Steckers einen Dichtring anzuordnen, der sich mit seinem radialen Innenumfang auf einer zugeordneten, zylindrischen Fläche des Stutzen abdichtend anlegt.

Eine Steckverbindung nach dem Oberbegriff von Anspruch 1 ist aus dem Document EP 0 911 565 A2 bekannt, insbesondere aus der Figur 7.

Es ist ferner bekannt, den Dichtring in axialer Richtung (in Einsteckrichtung und in Gegenrichtung hierzu) gegen Verschiebung gesichert am Innenumfang des Steckers anzuordnen. Hierbei liegt der Dichtungsring in der einen axialen Richtung an einer radialen Schulter vergrößerten Durchmessers am Stecker an und wird in der entgegen gesetzten Richtung von einem Sicherungsring eingefasst.

Der Sicherungsring besteht nach dem Stand der Technik aus einem Napfziehteil, das aus einer runden Scheibe im Tiefziehverfahren hergestellt wird. Daraus ergibt sich ein zylinderförmiges Teil mit einer durchgehenden Bodenfläche. Um hieraus den Sicherungsring zu fertigen, musste die Bodenfläche zentrisch ausgestanzt werden, wodurch ein großer Materialabfall von etwa 60 bis 70 % des Gesamtmaterials des Sicherungsrings entstand.

Auch bei der Herstellung der Grundform des Sicherungsrings, welcher als runde Scheibe aus einem Blechband ausgestanzt wird, entsteht ein hoher Materialabfall durch Ausstanzen aus dem Blechteil, um hieraus die runde Scheibe zu gewinnen.

Die Herstellung eines solchen Sicherungsrings und dessen Verankerung im Presssitz am Steckteil ist dem gemäß aufwendig und mit hohen Unkosten versehen.

Der Erfindung liegt deshalb die Aufgabe zugrunde, eine Steckverbindung der eingangs genannten Art so weiterzubilden, dass ein kostengünstigerer und einfacherer Sicherungsring verwendet werden kann.

Zur Lösung der gestellten Aufgabe ist die Erfindung durch eine Steckverbindung nach Anspruch 1 gekennzeichnet.

Mit der gegebenen technischen Lehre ergibt sich der Vorteil, dass statt eines L-förmig profilierten Ringes ein flacher, etwa einen Rechteckquerschnitt aufweisender, Ring verwendet wird.

Daher ist es nicht mehr notwendig, ein umlaufendes Napfteil auszuformen, mit dem der Ring in Presssitz an der Innenseite des Steckerteils gehalten wird.

Die Erfindung sieht vielmehr vor, den flachen Sicherungsring einfach in ein zylinderförmiges Hülsenteil des Steckerteils einzuschieben, solange bis er auf eine Anlageschulter trifft und dort festgelegt ist.

Die der Anlageschulter gegenüberliegende Lagensicherung des Sicherungsrings erfolgt durch aus dem Material des Hülsenteils herausgedrückte Sicken, die sich seitlich an den Sicherungsring anlegen.

Statt mehrerer am Umfang verteilt angeordneter Sicken kann auch eine einzige umlaufende Sicke vergrößerten Durchmessers verwendet werden.

Damit ergibt sich eine wesentlich einfachere Halterung des Sicherungsrings, und er kann auch wesentlich einfacherer hergestellt werden.

Nach einem weiteren Merkmal der Erfindung ist es vorgesehen, dass der Sicherungsring aus einem Spiralband hergestellt wird, welches mit handelsüblichen Wickelmaschinen hergestellt werden kann. Ein solcher Spiralwickel wird dadurch hergestellt, dass das Flachbandmaterial des Sicherungsrings in einer Wickelmaschine endlos aufgewickelt wird, wodurch sich ein Spiralwickel ergibt.

Hieraus wird der Sicherungsring dadurch hergestellt, dass das Spiralband stückweise abgeschnitten wird und zwar so, dass der Sicherungsring als am Umfang umlaufender Ring abgeschnitten wird und die beiden Enden des Sicherungsringes einen kurzen Spalt zwischen sich ausbilden.

Der Ring ist also nicht geschlossen, sondern die beiden Enden bilden zwischen sich einen Spalt aus. Durch den Schnitt aus einem Spiralband ergibt sich im übrigen der Vorteil, dass die beiden Federenden federnd gegeneinander angestellt sind, was der Charakteristik eines Sprengrings entspricht. Dadurch wird der Dichtungsring federnd vorgespannt und besser lagengesichert.

Damit besteht der weitere Vorteil, dass der Sicherungsring einfach im Durchmesser verkleinert werden kann, wenn er in seine Aufnahmenut eingebracht werden soll. Die beiden Enden werden zueinander versetzt und in einer Ebene gegeneinander verschoben.

Dadurch wird der Sicherungsring im Durchmesser verkleinert, und in dieser zusammengepressten Form wird er in seine Aufnahmenut eingebracht, wodurch er sich an der einen Seite an der steckerseitigen Anlageschulter und an der anderen Seite an den steckerseitigen Sicken anlegt. Damit ist ein einwandfreier Sitz des Sicherungsrings gegeben, der somit sehr einfach montierbar ist.

Damit ist es erstmals möglich, einen Sicherungsring ohne Materialverluste zu schaffen, weil eine Vielzahl von gleichartigen Sicherungsringen aus einem einzigen Spiralwickel hergestellt werden können. Es bedarf keines Stanz- und keines Umformvorganges mehr.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht eines Spiralwickels für die Herstellung des Sicherungsringes;
- Figur 2:: die perspektivische Ansicht eines aus dem Spiralwickel nach Figur 1 hergestellten Sicherungsringes;

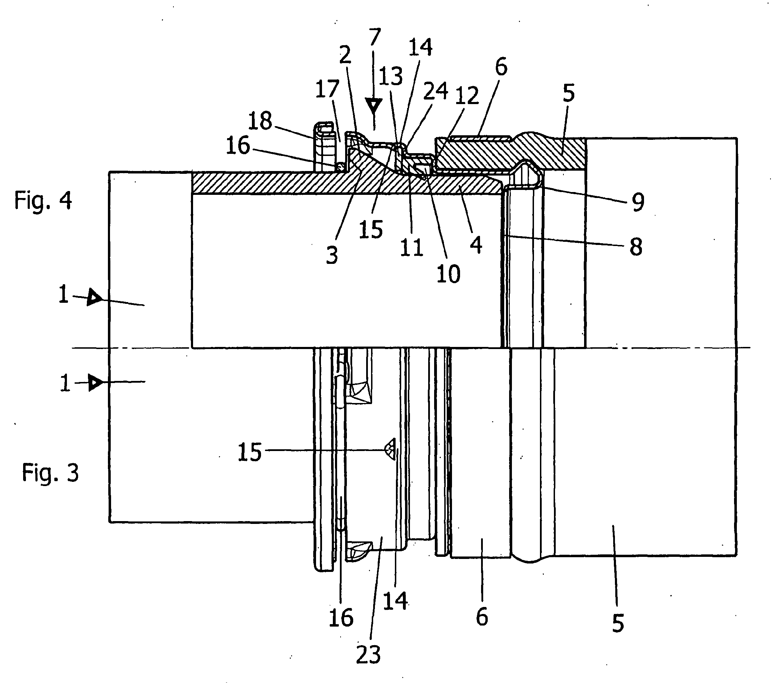

- Figur 3:: eine Seitenansicht einer Steckverbindung;
- Figur 4:: Schnitt durch die Steckverbindung nach Figur 3.

Die Steckverbindung besteht im wesentlichen aus einem Stutzen 1, der einen etwa zylinderförmigen Querschnitt aufweist, auf dessen Außenumfang eine Rastschulter 2 vergrößerten Durchmessers angeordnet ist, die auf der einen Seite eine Rastfläche 3 und auf der gegenüberliegenden Seite eine Schräge ausbildet. Die Schräge setzt sich nach vorne hin in ein zylindrisches Hülsenteil 4 fort.

Das Hülsenteil 4 wird in einen Stecker 7 eingesteckt und dort mithilfe einer etwa U-förmigen Rastfeder 16 verrastet.

Der Stecker 7 bildet eine zylindrische Aufnahmefläche für das Aufschieben eines Schlauches 5, der dort mit einer Schelle 6 festgelegt ist.

Der Stecker 7 ragt in den Schlauch mit einer Ringwulst 9 hinein, der einen Anschlag 8 für die Stirnseite des dort einzuschiebenden Stutzens 1 bildet.

Die Rastverbindung wird dadurch hergestellt, dass der Stecker 7 die U-förmige Rastfeder 16 trägt, die in einem Schlitz 17 des Steckers angeordnet ist und deren beide parallel zueinander angeordnete Rastschenkel hinter der Rastfläche des Stutzens 1 zum Einrasten gebracht werden.

Zur Abdichtung der Steckverbindung dient ein Dichtring 11, der in einem Aufnahmeraum des Steckers 7 angeordnet ist. Die rechte Begrenzung für den Dichtring 11 wird von einer radialen Anlageschulter 12 am Stecker 7 gebildet, an den sich der Dichtring 11 mit seiner einen Seite anlegt.

Die gegenüberliegende Sicherung des Dichtrings 11 wird durch den erfindungsgemäßen Sicherungsring 13 bewerkstelligt.

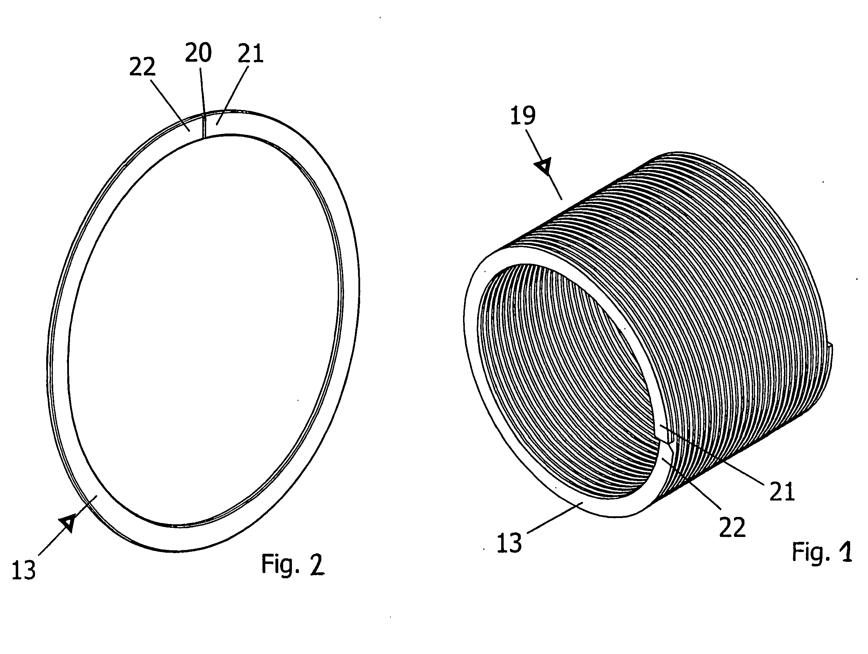

Der Sicherungsring 13 wird erfindungsgemäß in Form eines Flachbandmaterials als Spirale 19 gemäß Figur 1 gewickelt.

Aus dieser Spirale 19 wird der Sicherungsring durch Anbringen eines Schnittes herausgeschnitten, wodurch sich in der Schnittfläche der Spalt 20 ergibt. Dadurch ergibt sich die Form des Sicherungsrings 13 nach Figur 2. Dem Spalt 20 liegen somit die beiden Enden 21, 22 des Sicherungsrings 13 gegenüber.

Der so hergestellte Sicherungsring wird nun im Stecker 7 montiert. Hierbei ist vorgesehen, dass der Stecker eine Anlageschulter 24 ausbildet, an die sich der Sicherungsring 13 mit seiner einen Flachseite anlegt, während die gegenüberliegende Flachseite von stückweise am Umfang des Hülsenteils 23 herausgedrückten Sicken 15 abgestützt wird.

Zur Montage wird der Sicherungsring deshalb zusammengedrückt, so dass sich die Enden 21, 22 über den Spalt 20 hinweg kurzzeitig überlappen. Damit erhält er einen kleineren Durchmesser. Der Sicherungsring wird dann in den Bereich der Zylinderfläche 14 eingebracht und legt sich mit seiner einen Flachseite an der besagten Anlageschulter 24 am Stecker an. Durch Loslassen des Rings federn die beiden Enden 21, 22 in den nach Figur 2 unverformten Zustand zurück und die aus dem Material des Hülsenteils 23 des Steckers herausgedrückten Sicken 15 legen sich an der gegenüberliegenden Flachseite des Sicherungsrings 13 an. Damit ist dieser einwandfrei und lagengesichert am Stecker gehalten und sichert den Dichtring 11 gegen Herausfallen.

Der Stecker bildet im übrigen an seinem vorderen Einsteckende einen Verstärkungsrand 18, der aus Materialverstärkungsgründen umgebogen ist.

In einer anderen Ausgestaltung der Erfindung kann es vorgesehen sein, dass der Sicherungsring in seine Form nach Figur 2 aus einem Flachmaterial unmittelbar in einen Biegevorgang gebogen wird. Es wird bei dieser Ausführung kein Spiralwickel gebildet.
Die Biegung erfolgt vielmehr um einen Biegedorn, wodurch sich die Form des Sicherungsrings 13 nach Figur 2 ergibt.

Vorteil der Steckverbindung ist ein neuartiger Sicherungsring, der sehr kostengünstig hergestellt werden kann und der mit besonders einfachen Mitteln am Stecker verankert werden kann. Es bedarf keines schwierig herzustellenden und genau zu tolerierenden Presssitzes mehr, wie es nach dem Stand der Technik erforderlich war.

Nach der Erfindung kann der Sicherungsring 13 sogar noch ein gewisses radiales Spiel aufweisen, weil er auf der Zylinderfläche 14 gehalten wird und nur seitlich von den Sicken 15 eingefasst wird. Dadurch können Durchmesserabweichungen des Sicherungsringes ausgeglichen werden.

### Zeichnungslegende

- 1: Stutzen
- 2: Rastschulter
- 3: Rastfläche
- 4: Hülsenteil
- 5: Schlauch
- 6: Schelle
- 7: Stecker
- 8: Anschlag
- 9: Ringwulst
- 10: Aufnahmeraum
- 11: Dichtring
- 12: Anlageschulter
- 13: Sicherungsring
- 14: Zylinderfläche
- 15: Sicke
- 16: Rastfeld
- 17: Schlitz
- 18: Verstärkungsrand
- 19: Spirale
- 20: Spalt
- 21: Ende
- 22: Ende
- 23: Hülsenteil
- 24: Anschlagschalter

## Patentansprüche

1. Steckverbindung für den Anschluss von Rohren und Schläuchen, bestehend aus einem Stutzen (1), der mit einem Stecker (7) über mindestens eine Rastfeder (16) verrastbar ist, und mit mindestens einem Sicherungsring (13) zur lagengesicherten Halterung mindestens eines Dichtringes (11), der die Abdichtung zwischen dem Stecker und dem Stutzen bildet, wobei der Sicherungsring (13) aus einem Flachmaterial mit etwa rechteckförmigen Querschnitt besteht, der lediglich in ein zylinderförmiges Hülsenteil (23) des Steckers (7) eingeschoben ist und sich mit der einen Flachseite an einer oder mehreren Sicken (15) des Hülsenteils (23) anlegt, **dadurch gekennzeichnet, dass** die andere Flachseite des Sicherungsrings (13) an einer Anlageschulter (24) des Steckens (7) anliegt.

2. Steckverbindung nach Anspruch 1, **dadurch gekennzeichnet, dass** die Sicken (15) stückweise am Umfang des Hülsenteils (23) verteilt angeordnet sind.

3. Steckverbindung nach Anspruch 1, **dadurch gekennzeichnet, dass** die Sicke am Hülsenteil (23) ringsum laufend ausgebildet ist.

4. Steckverbindung nach einem der Ansprüche 1 bis 3, **dadurch gekennzeichnet, dass** der Sicherungsring (13) als Kreis-Abschnitt aus einer in Form eines Flachbandmaterials gewickelten Spirale (19) besteht.

5. Steckverbindung nach einem der Ansprüche 1 bis 3, **dadurch gekennzeichnet, dass** der Sicherungsring (13) aus einem Flachbandmaterial gebogen ist.

6. Steckverbindung nach einem der Ansprüche 1 bis 5, **dadurch gekennzeichnet, dass** der Sicherungsring (13) mit radialem Spiel in der Zylinderfläche (14) des Hülsenteils (23) sitzt.

7. Steckverbindung nach einem der Ansprüche 1 bis 6, **dadurch gekennzeichnet, dass** auch die Anlageschulter (24) des Steckers (7) aus einer oder mehreren durchmesser-vergrößerten Sicken gebildet ist.

## Claims

1. Plug-in joint for connecting pipes and hoses, consisting of a nozzle (1) that can be snap-fastened to a male connector (7) by at least one snap spring (16), and with at least one retaining ring (13) for holding and securing in position at least one sealing ring (11) forming the seal between the male connector and the nozzle, wherein the retaining ring (13) consists of flat material with approximately rectangular cross-section which is simply slipped into a cylindrical sleeve part (23) of the male connector (7) and bears by one flat side on one or more beads (15) of the sleeve part (23), **characterized in that** the other flat side of the retaining ring (13) bears on an abutment shoulder (24) of the male connector (7).

2. Plug-in joint according to Claim 1, **characterized in that** the beads (15) are distributed piecewise around the circumference of the sleeve part (23).

3. Plug-in joint according to Claim 1, **characterized in that** the bead is formed continuously around the sleeve part (23).

4. Plug-in joint according to any one of Claims 1 to 3, **characterized in that** the retaining ring (13) consists of a circular piece cut from flat strip material coiled in a helix (19).

5. Plug-in joint according to any one of Claims 1 to 3, **characterized in that** the retaining ring (13) is bent out of flat strip material.

6. Plug-in joint according to any one of Claims 1 to 5, **characterized in that** the retaining ring (13) sits with radial play inside the cylindrical face (14) of the sleeve part (23).

7. Plug-in joint according to any one of Claims 1 to 6, **characterized in that** the abutment shoulder (24) of the male connector (7) is also formed from one or more beads of increased diameter.

## Revendications

1. Raccord pour tubes et tuyaux, composé d'un manchon (1) qui est apte à être verrouillé avec un élément d'emboîtement (7) par l'intermédiaire d'au moins un ressort d'encliquetage (16), et avec au moins une bague de blocage (13) pour fixer au moins une bague d'étanchéité (11), une fois mise en place, qui forme le joint d'étanchéité entre l'élément d'emboîtement et le manchon, étant précisé que la bague de blocage (13) se compose d'un matériau plat à section transversale rectangulaire et est simplement glissée dans l'élément en forme de douille cylindrique (23) de l'élément d'emboîtement (7), et qu'elle s'applique avec un côté plat contre une ou plusieurs moulures (15) de l'élément en forme de douille (23), **caractérisé en ce que** l'autre côté plat de la bague de blocage (13) est appliqué contre un épaulement d'appui (24) de l'élément d' emboîtement (7).

2. Raccord selon la revendication 1, **caractérisé en ce que** les moulures (15) sont réparties individuellement sur la circonférence de l'élément en forme de douille (23).

3. Raccord selon la revendication 1, **caractérisé en ce que** la moulure est formée sur tout le tour de l'élément formant douille (23).

4. Raccord selon l'une des revendications 1 à 3, **caractérisé en ce que** la bague de blocage (13) se compose, sous la forme d'un segment de cercle, d'une spirale (19) enroulée en forme de matériau plat en bande.

5. Raccord selon l'une des revendications 1 à 3, **caractérisé en ce que** la bague de blocage (13) est formée par cintrage à partir d'un matériau plat en bande.

6. Raccord selon l'une des revendications 1 à 5, **caractérisé en ce que** la bague de blocage (13) est placée avec un jeu radial dans la surface cylindrique (14) de l'élément formant douille (23).

7. Raccord selon l'une des revendications 1 à 6, **caractérisé en ce que** l'épaulement d'appui (24) du manchon (7) est formé lui aussi d'une ou plusieurs moulures à diamètre agrandi.
